Europäisches Patentamt

European Patent Office

Office européen des brevets

(19)

(11) Numéro de publication: **0 264 656
B1**

(12) **FASCICULE DE BREVET EUROPEEN**

(45) Date de publication du fascicule du brevet:
05.12.90

(51) Int. Cl.⁵: **A01K 5/02**, A01K 7/02

(21) Numéro de dépôt: **87114007.5**

(22) Date de dépôt: **25.09.87**

(54) **Distributeur automatique d'aliment solide pour animaux domestiques.**

(30) Priorité: **09.10.86  FR 8614276**

(43) Date de publication de la demande:
**27.04.88 Bulletin 88/17**

(45) Mention de la délivrance du brevet:
**05.12.90 Bulletin 90/49**

(84) Etats contractants désignés:
**AT BE CH DE ES GB IT LI NL SE**

(56) Documents cités:
**FR-A- 2 067 608
FR-A- 2 565 066**

(73) Titulaire: **Forrer, Christian, Lieudit Carmagnole Route de Fumel, F-47300 Villeneuve(FR)**

(72) Inventeur: **Forrer, Christian, Lieudit Carmagnole Route de Fumel, F-47300 Villeneuve(FR)**

(74) Mandataire: **Micheli & Cie, 118, rue du Rhône Case postale 47, CH-1211 Genève 6(CH)**

ACTORUM AG

## Description

La présente invention a pour objet un distributeur automatique d'aliment solide pour animaux domestiques permettant de délivrer séquentiellement des quantités dosées d'aliment solide plusieurs fois par jour à des intervalles de temps réglables comme défini dans la préambule de la revendication 1. Un tel distributeur est décret dans le fasciculte de bevet FR-A 2 565 066.

D'autres distributeurs automatiques d'aliment solide pour animaux domestiques existent et sont par exemple décrits dans les brevets US 3.450.101; US 3.762.373 ou US 4.422.409.

Ces distributeurs connus font intervenir un déplacement relatif, en rotation ou en translation, entre le réservoir d'aliment solide et le bac de distribution de cet aliment, ce qui nécessite un mécanisme compliqué et délicat faisant appel à un moteur d'une puissance relativement élevée. Ceci a pour inconvénient que ces distributeurs sont chers et que leur autonomie de marche, lorsqu'ils fonctionnent sur piles ou accumulateurs, est limitée du fait de la forte consommation d'énergie électrique.

De plus dans tous les appareils décrits dans les brevets américains, la dose d'aliment délivrée à heure fixe est toujours d'un volume ou d'un poids prédéterminé, indépendant du fait que l'animal ait terminé ou non sa ration précédente. Ceci conduit à un gâchis de nourriture et à un éparpillement de celle-ci autour du distributeur.

La présente invention a pour but de réaliser un distributeur automatique de doses séquentielles d'aliment pour animaux domestiques simple, bon marché, ayant une autonomie de fonctionnement accrue par rapport aux distributeurs existants.

Le distributeur automatique selon la présente invention se distingue par les caractéristiques énumérées à la revendication 1.

Le dessin annexé illustre schématiquement et à titre d'exemple une forme d'exécution d'un distributeur d'aliment selon l'invention.

La figure 1 en est une vue en perspective dans la position où l'alimentation du bac à croquettes par le réservoir de ces croquettes est obturée.

La figure 2 est une couple du distributeur dans la position qu'il occupe à la figure 1.

La figure 3 est une couple du distributeur pendant l'alimentation du bac en croquettes à partir du réservoir de croquettes.

La forme d'exécution illustrée du distributeur automatique de doses d'aliment solide pour animaux domestiques est combinée avec un abreuvoir à niveau constant. Le distributeur comporte un boîtier 1 présentant en coupe transversale la forme générale d'un C. La partie dorsale de ce boîtier comporte deux réservoirs, l'un 2 destiné à recevoir une réserve d'eau et l'autre 3 recevant des croquettes ou autre aliment solide. Ces réservoirs sont séparés par une paroi verticale 4 dont la partie supérieure présente une ouverture formant poignée.

La branche inférieure du boîtier 1 comporte deux mangeoires 5, 6 l'une 5 étant en communication avec le réservoir d'eau de façon connue pour que le niveau d'eau dans cette mangeoire 5 reste constant et l'autre 6 pouvant être mise en communication, comme on le verra plus loin, avec la goulotte, ou partie inférieure à fond incliné 7 du réservoir 3 de croquettes.

Le fond 8 de la mangeoire 6 pour aliment solide est mobile, ici monté pivotant sur le boîtier à sa partie arrière, un dispositif de fixation, ici une goupille coopérant avec des orifices 9, permettant de fixer la position angulaire désirée du fond 8. Suivant la position choisie pour le fond 8, l'usager peut modifier à volonté la capacité de la mangeoire 6 et donc le volume de croquettes destiné à un repas de l'animal.

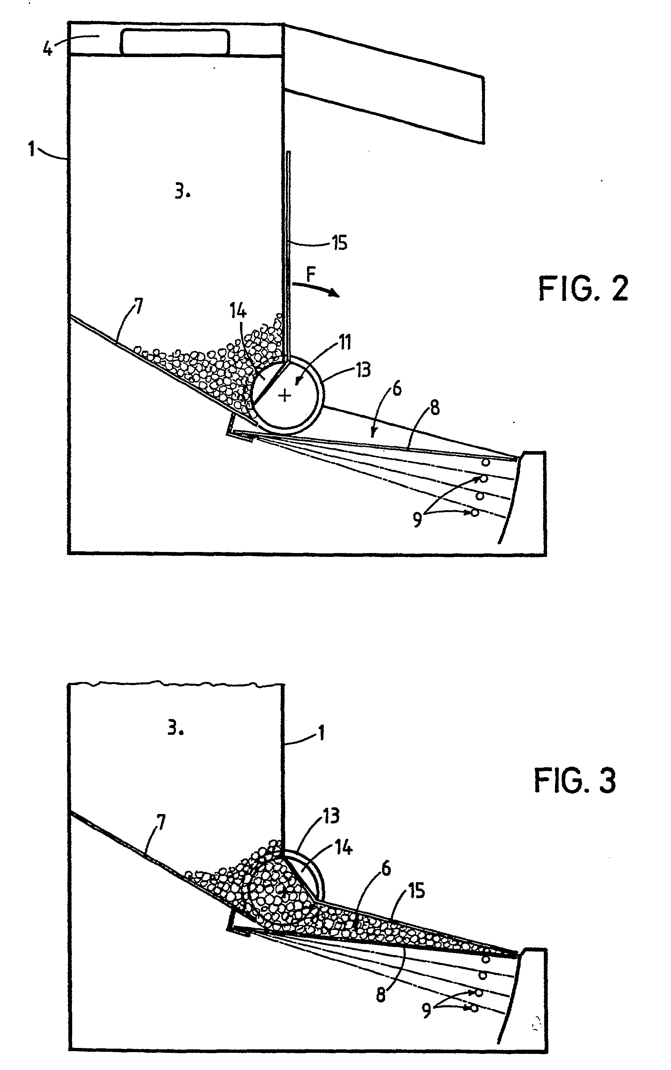

Le distributeur comporte encore un obturateur du réservoir de corquettes constitué par un organe cylindrique à ses extrémités 10, 11 pivotées sur le boîtier dans des organes tubulaires 12, 13 situés dans l'angle formé entre la partie dorsale et la partie inférieure du boîtier 1, et dont la partie médiane 14 est découpée de façon à présenter la forme d'un segment de cylindre. La forme de la découpe du cylindre peut résulter de l'intersection de ce cylindre avec un plan, un dièdre ou une surface courbe donnant ainsi à la découpe une forme appropriée pour éviter tout blocage de la rotation du cylindre par les aliments en réserve. Cet obturateur comporte encore un volet 15 dont la forme et les dimensions correspondent à l'ouverture de la mangeoire 6 en vue d'obturer celle-ci lorsqu'il est en position d'alimentation de cette mangeoire (figure 3). Un système de brosse ou de lamelle élastique peut être monté sur l'organe pivotant pour éviter tout coincement des croquettes à distribuer lors des mouvements alternatifs de l'obturateur.

L'organe tubulaire 13, servant de palier à l'une des extrémités de l'obturateur est prolongé jusqu'à l'autre extrémité du boîtier passant devant la partie du distributeur constituant l'abreuvoir. Cette autre extrémité de l'organe tubulaire 13 est maintenue en position par le moteur qu'il renferme, moteur monté sur le boîtier à l'aide d'une patte ou de tout autre moyen de fixation.

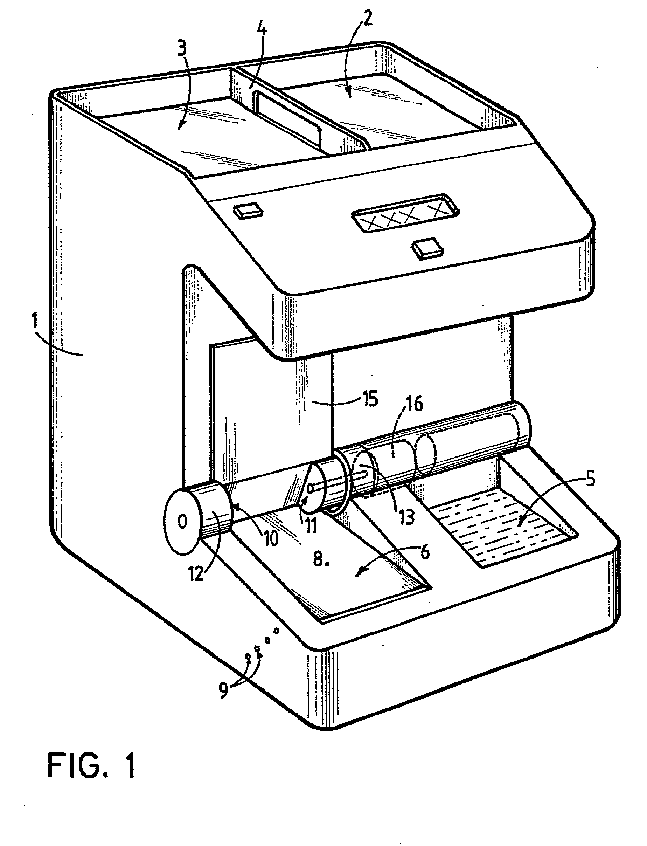

Un moteur électrique 16 de faible dimension et de faible consommation est logé dans cet organe tubulaire 13 de même qu'un réducteur entraîné par ce moteur et dont l'arbre de sortie est relié à l'obturateur 10, 11, 14, 15 en vue d'entraîner celui-ci dans des déplacements angulaires alternés entre une position de repos (figure 1, 2) et une position de remplissage de la mangeoire 6 (figure 3).

Le distributeur est encore muni d'une source de courant, une batterie ou un accumulateur (non illustré) pour l'alimenation du moteur et d'un dispositif de commande logé dans la branche supérieure du C du boîtier comportant un affichage, un bouton marche/veille et un organe de programmation. Cette commande fait intervenir des circuits électriques classiques et permet de programmer plusieurs fois par jour, à des heures présélectionnées, une rotation de l'obturateur, dans le sens de la flèche F de sa position, illustrée à la figure 2 jusqu'à celle illustrée à la figure 3, d'attendre quelques secondes dans cette seconde position pour permettre le remplissage de la mageoire 6, dont la face supérieure est obturée par le volet 15′, de granulés par gravité à partir du réservoir 3, puis de provoquer une rotation en sens inverse de l'obturateur pour le replacer en position de repos illustrée à la figure 2.

Ainsi, par une simple rotation du cylindre 12, 13, 14 de faible diamètre, on provoque l'ouverture et la fermetrue de la trémie alimentant la mangeoire 6. Lorsque la trémie est ouverte, le volet 15′ obture la face supérieure de la mangeoire 6, de sorte que seule la quantité désirée de croquettes est introduite dans celle-ci. si l'animal n'a pas mangé tout son repas précédent, seule une quantité complémentaire à la quantité restante est introduite dans la mangeoire 6 pour compléter la dose servant au repas suivant.

Le diamètre de l'obturateur étant faible, la puissance nécessaire à son déplacement angulaire est très réduite, de plus le moteur ne fonctionne que pendant quelques secondes par jour, ce qui assure une très grande autonomie de marche du distributeur.

Pendant les périodes de non utilisation du distributeur, celui-ci est mis sur veille, maintenant sous tension les circuits du dispositif de commande pour éviter un effacement de la programmation du nombre et des heures de repas.

Les principaux avantages du distributeur décrit sont les suivants :

1. Pas de mouvement relatif, rotatif ou rectiligne, entre le réservoir à croquettes et la mangeoire ce qui simplifie grandement la réalisation et réduit fortement la puissance nécessaire au fonctionnement.

2. Obturateur de faible diamètre effectuant un faible mouvement ce qui réduit énormément l'énergie consommée et permet l'utilisation d'un moteur de faible puissance, le couple nécessaire au fonctionnement étant réduit.

3. Facilité de réglage de la contenance de la mangeoire 6.

4. Remplissage automatique du complément de croquettes à la dose désirée pour un repas grâce au volet d'obturation de la mangeoire pendant son remplissage. En effet la quantité d'aliment distribué dépend de ce qui reste dans la mangeoire de la ration précédente. Il y a donc économie d'aliment et impossibilité d'accumulation d'aliment autour du distributeur.

Il est évident que des variantes peuvent être prévues. Un distributeur pourrait ne pas comporter d'abreuvoir.

Le distributeur peut comporter des pièces tubulaires, s'emboîtant sur les réservoirs 2, 3 pour augmenter la capacité de ceux-ci.

L'obturateur pourrait être réalisé différemment, par exemple par une tirette déplacée linéairement, auquel cas le volet d'obturation qui lui est solidaire serait également déplacé linéairement pour obturer respectivement dégager l'ouverture supérieure de la mangeoire 6.

## Revendications

1. Distributeur automatique de doses séquentielles, d'aliment solide pour animaux domestiques comprenant un réservoir d'aliment solide (3) et une mangeoire (6) recevant lesdites doses ainsi qu'un dispositif de commande permettant de programmer le nombre de doses délivrées par 24 heures et l'intervalle de temps les séparant, et par le fait que, quand l'obturateur est dans la seconde position, caractérisé par le fait que le réservoir d'aliment solide (3) et la mangeoire (6) font tous deux partie d'un boîtier (1) et sont solidaires rigidement l'un de l'autre, le réservoir comportant une ouverture inférieure donnant accès à ladite mangeoire, le distribureur comportant également un obturateur (10, 11, 14), actionné par un moteur électrique (16) alimenté par piles ou accumulateur, déplaçable entre une première position pour laquelle le réservoir est séparé de la mangeoire et la surface supérieure de ladite mangeoire accessible, et une seconde position pour laquelle le réservoir est relié à la mangeoire et alimente celle-ci en aliment solide par gravité, la face supérieure de la mangeoire est obturée par un volet (15) dont la forme et les dimensions correspondent à celles de l'ouverture de la mangeoire, limitant ainsi la quantité d'aliment délivrée.

2. Distributeur selon la revendication 1, caractérisé par le fait que le volet est solidaire de l'obturateur.

3. Distributeur selon la revendication 2, caractérisé par le fait que l'obturateur est déplaçable angulairement par rapport au boîtier.

4. Distributeur selon la revendication 2, caractérisé par le fait que l'obturateur est déplaçable linéairement par rapport au boîtier.

5. Distributeur selon l'une des revendications précédentes, caractérisé par le fait qu'il comporte encore un abreuvoir à niveau constant comportant un réservoir de liquide et une seconde mangeoire.

6. Distributeur selon l'une des revendications précédentes, caractérisé par le fait que le fond (8) de la mangeoire est mobile et peut être fixé dans plusieurs positions par rapport au boîtier pour régler le volume d'une dose d'aliment.

## Patentansprüche

1. Abgabeautomat für aufeinanderfolgende Portionen festen Futters für Haustiere, mit einem Vorratsbehälter (3) für festes Futter und einem Freßnapf (6) zur Aufnahme der Futterportionen sowie einer Steuervorrichtung, welche die Anzahl der während 24 Stunden abzugebenden Futterportionen und die Intervalle zwischen den Futterabgaben zu programmieren gestattet, wobei der Vorratsbehälter eine untere Öffnung aufweist, die einen Zugang zum Freßnapf gewährt und der Futterautomat auch eine Verschlußvorrichtung (10, 11, 14) aufweist, die von einem durch Batterien oder einen Akkumulator gespeisten Elektromotor (16) betätigbar und aus einer ersten Stellung, in welcher der Vorratsbehälter vom Freßnapf getrennt und die Oberseite desselben zugänglich ist, in eine zweite Stellung überführbar ist, in welcher der Vorratsbehälter mit dem Freßnapf verbunden ist und diesen mit festem Futter durch Schwerkraft auffüllt, dadurch gekennzeichnet, daß der Vorratsbehälter (3) für festes Futter und der Freßnapf (6) Teile eines Gehäuses (1) bilden und miteinander starr verbunden sind, und daß in der zweiten Stellung der Verschlußvorrichtung die Oberseite des Freßnapfes (6) durch eine Klappe (15) verschlossen ist, deren Form und Abmessungen jenen der Öffnung des Freßnapfes entsprechen und auf diese Weise die abgegebene Futtermenge begrenzen.

2. Abgabeautomat nach Anspruch 1, dadurch gekennzeichnet, daß die Klappe mit der Verschlußvorrichtung fest verbunden ist.

3. Abgabeautomat nach Anspruch 2, dadurch gekennzeichnet, daß die Verschlußvorrichtung relativ zum Gehäuse winkelmäßig verstellbar ist.

4. Abgabeautomat nach Anspruch 2, dadurch gekennzeichnet, daß die Verschlußvorrichtung relativ zum Gehäuse linear verstellbar ist.

5. Abgabeautomat nach einem der vorhergehenden Ansprüche, dadurch gekennzeichnet, daß er ferner eine Selbsttränkeeinrichtung mit konstantem Niveau aufweist, die einen Flüssigkeitsvorratsbehälter und einen zweiten Freßnapf umfaßt.

6. Abgabeautomat nach einem der vorhergehenden Ansprüche, dadurch gekennzeichnet, daß der Boden (8) des Freßnapfes bewegbar und in verschiedenen Positionen relativ zum Gehäuse feststellbar ist, um das Volumen einer Futterportion einzustellen.

## Claims

1. Automatic distributor of sequential rations of solid food for the domestic animals comprising a solid food tank (3) and bin (6) receiving the said rations as well as a control device permitting to program the number of rations delivered in 24 hours and the time interval separating them, the tank comprising a lower opening giving access to said bin, the distributor further comprising an obturator (10, 11, 14), driven by an electric motor (16) fed by batteries or accumulator, displaceable between a first position for which the tank is separated from the bin, and the upper surface of said bin is accessible, and a second position for which the tank is connected to the bin and feeds it with solid food through gravity, characterized by the fact that the solid food tank (3) and the bin (6) are both part of a casing (1) and are rigidly fastened the one with the other, and by the fact that, when the obturator is in the second position the upper face of the bin is obturated by a flap (15) the shape and dimensions of which correspond to the ones of the opening of the bin limiting thus the quantity of food distributed.

2. Distributor as claimed in claim 1, characterized by the fact that the flap is fast with the obturator.

3. Distributor according to claim 2, characterized by the fact that the obturator is angularly displaceable with respect to the casing.

4. Distributor according to claim 2, characterized by the fact that the obturator is linearly displaced with respect to the casing.

5. Distributor according to one of the preceeding claims, characterized by the fact that it further comprises a constant level drinking-through comprising a liquid tank and a second bin.

6. Distributor according to one of the preceeding claims, characterized by the fact that the bottom (8) of the bin is movable and can be fixed in several positions with respect to the casing to adjust the volume of a ration of food.

FIG. 1

4

1

3.

15

F

7

14

11

13

6

8

9

FIG. 2

3.

1

7

13

14

6

15

8

9

FIG. 3